# EUROPEAN PATENT SPECIFICATION

(11) **EP 3 288 001 B1**
(45) Date of publication and mention of the grant of the patent: **17.06.2020**
(21) Application number: 17170277.2
(22) Date of filing: 09.05.2017
(51) Int. Cl.: G08C 17/00

(54) **DATA INTERACTION SYSTEM**
DATENINTERAKTIONSSYSTEM
SYSTÈME D'INTERACTION DE DONNÉES

(30) Priority: 24.08.2016 CN 201610727551
(43) Date of publication of application: 28.02.2018
(73) Proprietor: Zhejiang Hanshow Technology Co. Ltd, Jiaxing Zhejiang (CN)
(72) Inventor: HOU, Shiguo, Chaoyang District, Beijing (CN); SHEN, Ming, Chaoyang District, Beijing (CN); LI, Liangyan, Chaoyang District, Beijing (CN)
(74) Representative: Boult Wade Tennant LLP

(56) References cited:
- WO-A1-2014/000469
- WO-A1-2016/101730
- US-A1- 2009 243 932

## Description

### TECHNICAL FIELD

The present disclosure relates to the field of information processing technology, particularly to a data interaction system.

### BACKGROUND

A remote controller is a kind of wireless transmitting device, which encodes key pressing information by modern digital coding technologies, and emits optical waves by an infrared diode, the optical waves are converted by an infrared receiver of a receiver from an infrared signal received thereby into an electrical signal, the electrical signal is transmitted to a processor to be decoded, corresponding instructions are demodulated so as to meet the requirements of controlling a device such as a set-top box to complete necessary operations. An access point AP is a wireless data transceiver for the wireless network and is a core of the wireless network. Generally, the remote controller is used for controlling the device such as the set-top box, and the AP performs data interaction with the device in the wireless network, the remote controller cannot perform bi-directional data interaction with the AP.

Document US2009243932A1 discloses methods and systems for determining the location of an electronic device. The method comprises transmitting a signal between a plurality of known locations and receiving signal at device of unknown location such as a mobile device. The signal may include multiple tones having different frequencies and resulting in sets of residual phase differences. The location of the mobile device may be determined using the known locations and the frequency and phase differences between the transmitted tones. In one embodiment, OFDM signals may be used between an access point and mobile device, for example, to determine the location of the mobile device.

### SUMMARY

An embodiment of the present disclosure provides a data interaction system which can implement a bi-directional data interaction between a remote controller and an AP.

The data interaction system comprises:
a remote controller and an access point AP;
the remote controller is configured to send data in a certain format;
the AP is configured to listen and receive data sent by the remote controller on the dedicated channel of the remote controller;
wherein the remote controller and the AP use identical communication parameters to perform a bi-directional data interaction,
wherein the data interaction system further comprises: a background server; the AP is further configured to forward the data sent by the remote controller to the background server; the background server is configured to process the data sent by the remote controller,
wherein the AP is further configured to collect energy of the data packet uploaded by the remote controller, and transmit the energy of the data packet to the background server;
the background server is further configured to analyze the energy of the data packet, and determine the position of the remote controller from the AP; and
the data packet comprises the data in the certain format;
wherein there are a plurality of APs;
the plurality of APs are further configured to collect energy of the data packet uploaded by the remote controller, and transmit the energy of the data packet to the background server;
the background server is also configured to analyze the energy of the data packet collected by the plurality of APs, and determine the position of the remote controller.

In embodiments of the present disclosure, the AP in the data interaction system can listen on a dedicated channel of the remote controller and receive the data in the certain format sent by the remote controller; and the remote controller and the AP use identical communication parameters to perform a bi-directional data interaction, thereby implementing the bi-directional interaction between the remote controller and the AP.

### BRIEF DESCRIPTION OF DRAWINGS

In order to more clearly explain the technical solutions of the embodiments of the present disclosure or the prior art, the drawings to be used in the descriptions of the embodiments or the prior art are briefly introduced as follows. Obviously, the drawings in the following description are only some embodiments of the present disclosure, and a person skilled in the art can further obtain other drawings from these drawings without paying any creative effort.
Fig. 1 is a structural block diagram of a data interaction system provided by an embodiment of the present disclosure;
Fig. 2 is a structural block diagram of a data interaction system provided by an embodiment of the present disclosure;
Fig. 3 is a schematic diagram illustrating that the data interaction system provided by an embodiment of the present disclosure is applied to a shopping mall and supermarket scene; and
Fig. 4 is another schematic diagram illustrating that the data interaction system provided by an embodiment of the present disclosure is applied to a shopping mall and supermarket scene.

### DESCRIPTION OF EMBODIMENTS

The technical solutions of the embodiments of the present disclosure will be clearly and completely described with reference to the drawings of the embodiments of the present disclosure. Obviously, the embodiments as described are just part of the embodiments of the present disclosure rather than all the embodiments. Based on the embodiments of the present disclosure, all the other embodiments obtained by a person skilled in the art without paying any creative effort fall within the protection scope of the present application.

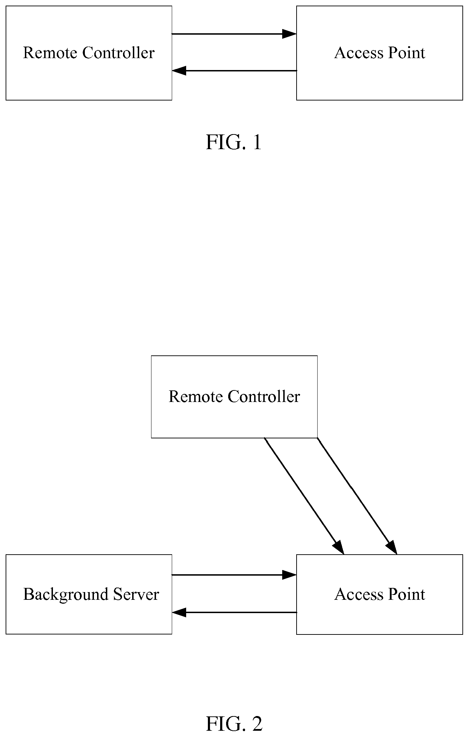

An embodiment of the present disclosure provides a data interaction system which can implement the bi-directional data interaction between the remote controller and the AP. The structural block diagram of the data interaction system is shown in Fig. 1. The data interaction system comprises a remote controller and an access point AP. The remote controller is configured to send data in a certain format. The AP is configured to listen and receive data sent by the remote controller on a dedicated channel of the remote controller. The remote controller and the AP use identical communication parameters to perform a bi-directional data interaction. The AP returns response information to the remote controller after receiving the data sent by the remote controller. The response information may include Acknowledgement ACK or heartbeat information, wherein the ACK, that is, an acknowledgement character, is a kind of transport control character sent from a receiving station to a transmitting station during data communication, the ACK indicates that it is confirmed the data as sent having been received inerrably. The heartbeat message is a message sent from a transmitting station to a receiving station, and such message can make the receiving station determine whether and when the transmitting station has a fault or is terminated.

As shown in Fig. 2, the data interaction system further comprises a background server. The AP is further configured to forward the data sent by the remote controller to the background server. The background server is configured to process the data sent by the remote controller. The background server is further configured to feedback results of processing the data sent by the remote controller to the AP. The background server and the AP perform the bi-directional data interaction.

In implementation, the 2.4G wireless communication protocol can be used for the bi-directional data interaction between the remote controller and the AP, and a wired or wireless manner can be used for the bi-directional data interaction between the background server and the AP. The 2.4G communication channel can be used for the communication between the remote controller and the AP, with a default communication frequency point and a communication rate being consistent, and both of the remote controller and the AP use a same modulation mode. With the same communication parameter, the remote controller can transmit the information in a certain format to the AP which would continuously listen to any information sent by the remote controller on the dedicated channel of the remote control, and after receiving the information, the AP transmits the received information to the background server in the wired or wireless manner so as to make the background server perform a corresponding processing on the information. The use of a 2.4GHz technology is mainly due to the 2.4G technology being mature, and there is a standard communication frequency band (2.4GHz ISM) planed internationally. Based on the radio frequency characteristics of 2.4G, it is easy to implement a compact design (an antenna can be designed to be small and exquisite); meanwhile, it is easy to realize omni-directional communication ability without blind angle (the antenna can realize the omni-directional communication). Moreover, an uplink channel and a downlink channel of the 2.4GHz technology almost have the same capacity, and the uplink channel has a burst capability.

In implementation, in this embodiment, the data in the certain format comprises: a data packet type and remote control information carried by the data packet, wherein the remote control information may comprise one of or any combination of a remote controller user identifier, a remote controller identifier and a remote controller input information. The remote controller user identifier and the remote controller identifier can pre-set in the remote controller in advance. When the remote control information comprises the remote controller user identifier and the remote controller identifier, the remote controller provides the remote controller user identifier and the remote controller identifier to the AP, the AP transmits the remote controller user identifier and the remote controller identifier to the background server, and the background server can associate the remote controller user identifier with the remote controller identifier and perform the corresponding processing. When the remote control information comprises the remote controller user identifier and the remote controller input information, the remote controller input information herein represents a certain type of operation information, the background server can associate the remote controller user identifier with the remote controller input information, process the remote controller input information, and determine who is the remote controller user completing the operation corresponding to the remote controller input information.

In implementation, in this embodiment, the data in the certain format further comprises a check information, and the AP is also configured to perform an integrity check on the data in the certain format according to the check information.

In implementation, the AP is also configured to collect energy of the data packet uploaded by the remote controller, and transmit the energy of the data packet to the background server; the background server is also configured to analyze the energy of the data packet, and determine the position of the remote controller from the AP; wherein the data packet comprises the data in the certain format. For example, when the energy of the data packet is more than -40dBm, it is determined that the position of the remote controller from the AP is within 1 meter; when the energy of the data packet is between -60dBm and -40dBm, it is determined that the position of the remote controller from the AP is within 5 meters. In this embodiment, there may be a plurality of APs; the plurality of APs are also configured to collect energy of the data packet uploaded by the remote controller, and transmit the energy of the data packet to the background server; the background server is also configured to analyze the energy of the data packet uploaded by the remote controller which is collected by the plurality of APs, and determine the position of the remote controller; wherein the data packet comprises the data in the certain format.

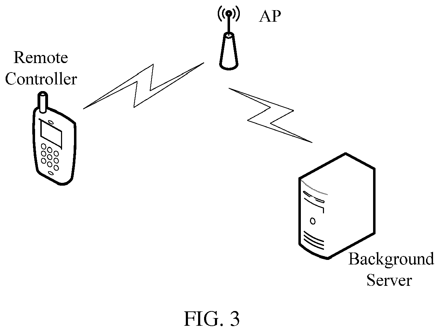

In the following, the data interaction system of the embodiment of the present disclosure is applied to a practical scene and the function thereof is described in detail.
1. The data interaction system of the embodiment of the present disclosure is applied to the scene of personnel management of a retail mall and supermarket.
In the existing daily operation and management of the retail mall and supermarket, a shop assistant does manual operations in most cases. For example, as for the attendance management of the shop assistants, the common technology is to swipe a card, each shop assistant is equipped with an NFC contact card whose information is bound to the shop assistant information one to one, the attendance or departure of the shop assistant is confirmed by means of swiping the card. The card swiping machine in this method is fixed at a certain place, and the shop assistant must swipe the card at a designated place. The problems existing in the prior art can be solved by using the data interaction system of the embodiment of the present disclosure.
As shown in Fig. 3, when the shop assistant is equipped with a remote controller with a low cost, the basic information of the shop assistant, such as name, job number ID, and ID number of the remote controller itself, can be pre-set inside the remote controller. After the remote controller is pre-set with the relevant information, this remote controller can be linked to the AP. The remote controller provides the corresponding remote control information to the AP which can receive and forward the corresponding remote control information to the background server, and the background server would process the corresponding remote control information.
As for the personnel attendance, the data format between the remote controller and the AP is shown in Table 1.

**Table 1**

| 1B | 1B | 4B | 4B | 4B | 2B |
|---|---|---|---|---|---|
| Packet type: | Packet length | Personnel name or ID | Remote controller | Reserved information | CRC check |
| attendance | | | ID | | |

A packet head is used for indicating that it is the data packet of personnel attendance, this data packet is transmitted to the AP which forwards the data packet to the background server, and the background server associates the personnel name or ID with the remote controller ID, and perform a related processing. For example, it is possible to record the arrival time of the shop assistant, and to finally confirm that the shop assistant has arrived at the shop. Meanwhile, after the attendance information reported by the remote controller is acquired by the AP, the AP can calculate the position of the shop assistant from the AP by the energy information of the received data packet, and finally position the location of the shop assistant at the store, thereby providing information basis for the personnel scheduling and work arrangement of the store.
2. The data interaction system of the embodiment of the present disclosure is applied to the scene of item management of the retail mall and supermarket.

For example, the data interaction system of the embodiment of the present disclosure is applied to the scene of modifying a bulk price in a large shopping mall and supermarket. For a bulk area, generally, the price will be adjusted at any time based on the freshness of products. Based on similar reasons, the shop assistant often needs to manually input the bulk information and then print a shelf label of the bulk during the selling of the bulk, which wastes time and gives bad experience to the customer.

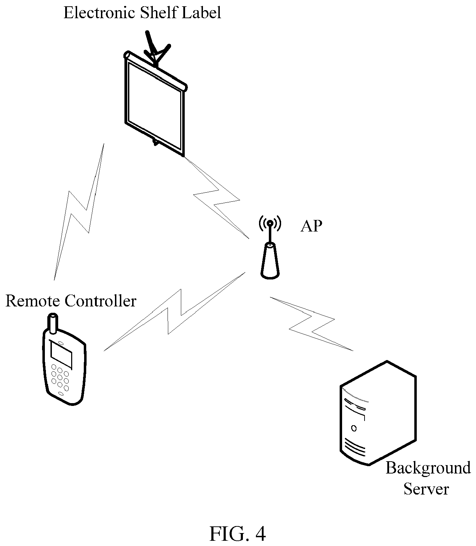

As shown in Fig. 4, the price of the bulk is modified by using the data interaction system of the embodiment of the present disclosure, which can speed up the adjustment process and provide convenient service for the stores. A communication initiator is the remote controller. Firstly, the shop assistant needs to input the price to be modified to the remote controller, and then acquire the goods information by using the remote controller to contact an electronic shelf label, and send the new price information and goods information to the AP after packaging the new price information and goods information. After receiving the new price information and goods information, the AP synchronizes the received new price information to the background server which substitutes the previous price information with the new price information, and transmits the new price information and the goods information via the AP to the electronic shelf label to be displayed, which is convenient for the store to manage the price and an amount of sales.

The data packet format of a changed price of the bulk sent from the remote controller to the AP is shown in Table 2.

**Table 2**

| 1B | 1B | 4B | 4B | 4B | 2B |
|---|---|---|---|---|---|
| Packet type: price of bulk | Packet length | Shop assistant identity ID | Goods information | Price information | CRC check |

The background server adjusts the price displayed on the electronic shelf label when receiving the information "packet type: price of bulk"; the "goods information" represents the type of merchandise whose price is modified by the shop assistant; and the "Price information" is the new price information input by the keys of the remote controller.

Based on the application scene of the retail mall and supermarket, due to the use characteristics of the retail mall and supermarket shop, the shop assistant often does the repetitive work, so a light, convenient and flexible application will lead to more efficient work. The remote controller in the system adopts a very light and convenient design, and supports one-key work mode at the same time. The workflow of this mode is as follows: firstly, the shop assistant sets his or her regular work contents into the remote control, and defines the corresponding keys, for example, key "1" represents attendance, key "2" represents modifying the price of bulk, so the shop assistant can pre-configure this setting into the remote controller, which can greatly lower the complexity of work in daily use, and can bring about very good user experience because the corresponding work can be completed only by pressing one key.

To sum up, the data interaction system in the embodiment of the present disclosure comprises the remote controller and the AP. The AP can listen on a dedicated channel of the remote controller and receive the data in a certain format sent by the remote controller; the remote controller and the AP use an identical communication parameter to perform the bi-directional data interaction, which implements the bi-directional data interaction between the remote controller and the AP.

Persons skilled in the art should understand that the embodiments of the present disclosure can be provided as a method, a system or a computer program product. Therefore, the present disclosure can take the form of a full hardware embodiment, a full software embodiment, or an embodiment with combination of software and hardware aspects. Moreover, the present disclosure can take the form of a computer program product implemented on one or more computer usable storage mediums (including, but not limited to, a magnetic disc memory, CD-ROM, optical storage, etc.) containing therein computer usable program codes.

The present disclosure is described with reference to a flow chart and/or block diagram of the method, device (system) and computer program product according to the embodiment of the present disclosure. It should be understood that each flow and/or block in the flow chart and/or block diagram and a combination of the flow and/or block in the flow chart and/or block diagram can be realized by the computer program instructions. These computer program instructions can be provided to a general computer, a dedicated computer, an embedded processor or a processor of other programmable data processing device to generate a machine, such that the instructions performed by the computer or the processor of other programmable data processing devices generate the device for implementing the function designated in one flow or a plurality of flows in the flow chart and/or a block or a plurality of blocks in the block diagram.

These computer program instructions can also be stored in a computer readable memory capable of directing the computer or other programmable data processing devices to operate in a specific manner, such that the instructions stored in the computer readable memory generate a manufactured article including an instruction device which implements the function designated in one flow or a plurality of flows in the flow chart and/or a block or a plurality of blocks in the block diagram.

These computer program instructions can also be loaded onto the computer or other programmable data processing devices, such that a series of operation steps is executed on the computer or other programmable devices to generate the processing realized by the computer, therefore the instructions executed on the computer or other programmable devices provide the steps for implementing the function designated in one flow or a plurality of flows in the flow chart and/or a block or a plurality of blocks in the block diagram.

The above are only the preferable embodiments of the present invention, and are not used for limiting the present invention. For persons skilled in the art, the embodiments of the present invention can be modified and changed variously.

## Claims

1. A data interaction system, comprising:
a remote controller and an access point, AP;
the remote controller is configured to send data in a certain format;
**characterized in that** the AP is configured to listen and receive data sent by the remote controller on a dedicated channel of the remote controller;
wherein the remote controller and the AP use identical communication parameters to perform a bi-directional data interaction,
wherein the data interaction system further comprises: a background server; the AP is further configured to forward the data sent by the remote controller to the background server; the background server is configured to process the data sent by the remote controller,
wherein the AP is further configured to collect energy of the data packet uploaded by the remote controller, and transmit the energy of the data packet to the background server;
the background server is further configured to analyze the energy of the data packet, and determine the position of the remote controller from the AP; and
the data packet comprises the data in the certain format;
wherein there are a plurality of APs;
the plurality of APs are further configured to collect energy of the data packet uploaded by the remote controller, and transmit the energy of the data packet to the background server;
the background server is also configured to analyze the energy of the data packet collected by the plurality of APs, and determine the position of the remote controller.

2. The data interaction system according to claim 1, wherein the AP is further configured to return response information to the remote controller after receiving the data sent by the remote controller.

3. The data interaction system according to claim 1, wherein the identical communication parameters comprise: an identical communication frequency point, an identical communication rate and an identical modulation mode.

4. The data interaction system according to claim 1, wherein the remote controller and the AP use a 2.4G wireless communication protocol to perform the bi-directional data interaction.

5. The data interaction system according to claim 1, wherein the background server is further configured to feed back results of processing the data sent by the remote controller to the AP.

6. The data interaction system according to claim 5, wherein the background server and the AP use a wired or wireless network to perform the bi-directional data interaction.

7. The data interaction system according to claim 1, wherein the data in the certain format comprises: a data packet type and remote control information carried by a data packet.

8. The data interaction system according to claim 7, wherein the remote control information comprises one of or any combination of a remote controller user identifier, a remote controller identifier and remote controller input information.

9. The data interaction system according to claim 8, wherein when the remote control information comprises the remote controller user identifier and the remote controller identifier, the background server is configured to associate the remote controller user identifier with the remote controller identifier;
when the remote control information comprises the remote controller user identifier and the remote controller input information, the background server is configured to associate the remote controller input information with the remote controller user identifier, and process the remote controller input information.

10. The data interaction system according to claim 8, wherein the data in the certain format further comprises check information; and
the AP is further configured to perform an integrity check on the data in the certain format according to the check information.

## Patentansprüche

1. Dateninteraktionssystem, umfassend:
eine Fernsteuerung und einem Zugangspunkt AP;
die Fernsteuerung ist zum Senden von Daten in einem bestimmten Format konfiguriert;
**dadurch gekennzeichnet, dass** der AP zum Abhören und Empfangen von Daten konfiguriert ist, die von der Fernsteuerung auf einem eigens dafür eingerichteten Kanal der Fernsteuerung gesendet werden;
wobei die Fernsteuerung und der AP identische Kommunikationsparameter verwenden, um eine bidirektionale Dateninteraktion durchzuführen,
wobei Dateninteraktionssystem ferner umfasst: einen Hintergrund-Server; der AP ferner zur Weiterleitung der von der Fernsteuerung gesendeten Daten an den Hintergrund-Server konfiguriert ist; der Hintergrund-Server zur Verarbeitung der von der Fernsteuerung gesendeten Daten konfiguriert ist,
wobei der AP ferner zur Sammlung der Energie des von der Fernsteuerung hochgeladenen Datenpakets und Übertragung der Energie des Datenpakets an den Hintergrundserver konfiguriert ist;
der Hintergrundserver weiterhin zur Analyse der Energie des Datenpakets und Bestimmung der Position der Fernsteuerung von dem AP konfiguriert ist; und
das Datenpaket die Daten in dem bestimmten Format umfasst;
wobei es eine Vielzahl von APs gibt;
die Vielzahl von APs ferner zum Sammeln der Energie des von der Fernsteuerung hochgeladenen Datenpakets und Übertragung der Energie des Datenpakets an den Hintergrundserver konfiguriert ist;
der Hintergrundserver auch zur Analyse der Energie des von der Vielzahl von APs gesammelten Datenpakets, und Bestimmung der Position der Fernsteuerung konfiguriert ist.

2. Dateninteraktionssystem nach Anspruch 1, wobei der AP ferner zur Rückführung von Antwortinformationen an die Fernsteuerung nach dem Empfang der von der Fernsteuerung gesendeten Daten konfiguriert ist.

3. Dateninteraktionssystem nach Anspruch 1, wobei die identischen Kommunikationsparameter Folgendes umfassen: einen identischen Kommunikationsfrequenzpunkt, eine identische Kommunikationsrate und einen identischen Modulationsmodus.

4. Dateninteraktionssystem nach Anspruch 1, wobei die Fernsteuerung und der AP ein drahtloses 2.4G-Kommunikationsprotokoll zur Durchführung der bidirektionalen Dateninteraktion verwenden.

5. Dateninteraktionssystem nach Anspruch 1, wobei der Hintergrundserver ferner zur Rückkopplung der Ergebnisse der Verarbeitung der von der Fernsteuerung an den AP gesendeten Daten konfiguriert ist.

6. Dateninteraktionssystem nach Anspruch 5, wobei der Hintergrundserver und der AP ein drahtgebundenes oder drahtloses Netzwerk zur Durchführung der bidirektionalen Dateninteraktion verwenden.

7. Dateninteraktionssystem nach Anspruch 1, wobei die Daten in dem bestimmten Format Folgendes umfassen: einen Datenpakettyp und von einem Datenpaket getragene Fernsteuerungsinformationen.

8. Dateninteraktionssystem nach Anspruch 7, wobei die Fernsteuerungsinformationen eine oder eine beliebige Kombination aus einer Fernsteuerungsbenutzerkennung, einer Fernsteuerungskennung und Fernsteuerungseingangsinformationen umfassen.

9. Dateninteraktionssystem nach Anspruch 8, wobei, wenn die Fernsteuerungsinformation die Fernsteuerungsbenutzerkennung und die Fernsteuerungskennung umfasst, der Hintergrund-Server zur Verknüpfung der Fernsteuerungsbenutzerkennung mit der Fernsteuerungskennung konfiguriert ist;
wenn die Fernsteuerungsinformationen die Fernsteuerungsbenutzerkennung und die Fernsteuerungseingangsinformationen umfassen, der Hintergrund-Server zur Verknüpfung der Fernsteuerungseingangsinformationen mit der Fernsteuerungsbenutzerkennung und Verarbeitung der Fernsteuerungseingangsinformationen konfiguriert ist.

10. Dateninteraktionssystem nach Anspruch 8, wobei die Daten in dem bestimmten Format ferner Prüfinformationen umfassen; und
der AP ferner zur Durchführung einer Integritätsprüfung der Daten in dem bestimmten Format gemäß den Prüfinformationen konfiguriert ist.

## Revendications

1. Système d'interaction de données, comprenant :
une télécommande et un point d'accès, AP ;
la télécommande est configurée pour envoyer des données dans un certain format ;
**caractérisé en ce que** l'AP est configuré pour écouter et recevoir des données envoyées par la télécommande sur un canal dédié de la télécommande ;
dans lequel la télécommande et l'AP utilisent des paramètres de communication identiques pour effectuer une interaction de données bidirectionnelle,
dans lequel le système d'interaction de données comprend en outre : un serveur d'arrière-plan ; l'AP est en outre configuré pour renvoyer les données envoyées par la télécommande au serveur d'arrière-plan ; le serveur d'arrière-plan est configuré pour traiter les données envoyées par la télécommande,
dans lequel l'AP est en outre configuré pour collecter de l'énergie du paquet de données téléchargé par la télécommande, et transmettre l'énergie du paquet de données au serveur d'arrière-plan ;
le serveur d'arrière-plan est en outre configuré pour analyser l'énergie du paquet de données, et déterminer la position de la télécommande par rapport à l'AP ; et
le paquet de données comprend les données dans le certain format ;
dans lequel il existe une pluralité d'AP ;
la pluralité d'AP sont en outre configurés pour collecter de l'énergie du paquet de données téléchargé par la télécommande, et transmettre l'énergie du paquet de données au serveur d'arrière-plan ;
le serveur d'arrière-plan est également configuré pour analyser l'énergie du paquet de données collecté par la pluralité d'AP, et pour déterminer la position de la télécommande.

2. Système d'interaction de données selon la revendication 1, dans lequel l'AP est en outre configuré pour renvoyer des informations de réponse à la télécommande après avoir reçu les données envoyées par la télécommande.

3. Système d'interaction de données selon la revendication 1, dans lequel les paramètres de communication identiques comprennent : un point de fréquence de communication identique, un débit de communication identique et un mode de modulation identique.

4. Système d'interaction de données selon la revendication 1, dans lequel la télécommande et l'AP utilisent un protocole de communication sans fil 2.4G pour effectuer l'interaction de données bidirectionnelle.

5. Système d'interaction de données selon la revendication 1, dans lequel le serveur d'arrière-plan est en outre configuré pour renvoyer des résultats du traitement des données envoyées par la télécommande à l'AP.

6. Système d'interaction de données selon la revendication 5, dans lequel le serveur d'arrière-plan et l'AP utilisent un réseau câblé ou sans fil pour effectuer l'interaction de données bidirectionnelle.

7. Système d'interaction de données selon la revendication 1, dans lequel les données dans le certain format comprennent : un type de paquet de données et des informations de commande à distance portées par un paquet de données.

8. Système d'interaction de données selon la revendication 7, dans lequel les informations de commande à distance comprennent l'un ou l'une quelconque combinaison d'un identifiant utilisateur de télécommande, d'un identifiant de télécommande et d'informations d'entrée de télécommande.

9. Système d'interaction de données selon la revendication 8, dans lequel lorsque les informations de commande à distance comprennent l'identifiant utilisateur de télécommande et l'identifiant de télécommande, le serveur d'arrière-plan est configuré pour associer l'identifiant utilisateur de télécommande à l'identifiant de télécommande ;
lorsque les informations de commande à distance comprennent l'identifiant utilisateur de télécommande et les informations d'entrée de télécommande, le serveur d'arrière-plan est configuré pour associer les informations d'entrée de télécommande à l'identifiant utilisateur de télécommande, et pour traiter les informations d'entrée de télécommande.

10. Système d'interaction de données selon la revendication 8, dans lequel les données dans le certain format comprennent en outre des informations de vérification ; et
l'AP est en outre configuré pour effectuer une vérification d'intégrité sur les données dans le certain format en fonction des informations de vérification.
